# EUROPEAN PATENT APPLICATION

(11) **EP 3 306 901 A1**
(43) Date of publication of application: **11.04.2018**
(21) Application number: 16802330.7
(22) Date of filing: 01.02.2016
(51) Int. Cl.: H04L 29/12

(54) **DOMAIN NAME SYSTEM ADDRESS CONFIGURATION METHOD AND APPARATUS, AND COMPUTER STORAGE MEDIUM**

(30) Priority: 29.05.2015 CN 201510289752
(71) Applicant: ZTE Corporation, Shenzhen, Guangdong 518057 (CN)
(72) Inventor: ZHANG, Lu, Shenzhen Guangdong 518057 (CN)
(74) Representative: Lavoix
(86) International application number: PCT/CN2016/073080
(87) International publication number: WO 2016/192407

(57) **Abstract**

Disclosed is a DNS address configuration method, comprising: acquiring a DNS request packet that is packaged in a first IPv4 packet and is sent by a user side; determining a record type of the DNS request packet sent by the user side; performing address detection on a DNS request packet of a first record type, directly forwarding a valid DNS request packet to a network side, and directly discarding a DNS request packet that is detected to be invalid; packaging a DNS request packet of a second record type into an IPv6 packet, and sending the IPv6 packet to the network side; and packaging a DNS response packet returned by the network side into a second IPv4 packet, and sending the second IPv4 packet to the user side. Also simultaneously disclosed are a DNS address configuration apparatus and a computer storage medium.

## Description

### TECHNICAL FIELD

The disclosure relates to a configuration management technology in the field of mobile communications, and particularly relates to a method and device for Domain Name System (DNS) address configuration, and a computer storage medium.

### BACKGROUND

With development of wireless communication technologies, network equipment and processing technologies of each mobile operating company throughout the world become increasingly complex. Due to advantages of Internet Protocol Version 6 (IPv6), it is inevitable to apply IPv6 technologies to wireless communication. IPv6 technologies of network sides of each operating company are largely identical with minor differences. However, during practical use in combination of a user side, there may exist various problems. Because the IPv6 and an Internet Protocol Version 4 (IPv4) are incompatible with each other and the IPv4 is mainly used for the present Internet, a transition technology is required at present. For a data channel product, a dual-stack technical solution is relatively more suitable to be adopted, and requires both a user side and a network node to have an IPv4 and IPv6 dual-stack function, so that the IPv4 and the IPv6 work in a mixed environment.

An IPv6 address consists of two parts, i.e. a prefix and an interface identifier, wherein higher 64 bits form the prefix, and lower 64 bits form the interface identifier. There are two sorts of IPv6 addresses of a user side: a link local address and a global unicast address, and the user side may only communicate with the global unicast address. Two automatic configuration manners are adopted for the global unicast address, i.e. Stateless Address Auto configuration (SLAAC) and stateful address automatic configuration, SLAAC refers to that no Dynamic Host Configuration Protocol v6 (DHCPv6) server is required for management and the user side calculates own IPv6 address according to a Route Advertisement (RA) and own Media Access Control (MAC) address, and stateful address automatic configuration refers to that a DHCPv6 server is adopted for unified management and the user side acquires the IPv6 address and other information (for example, a DNS) from an address pool of the DHCPv6 server. For the two technologies, the DHCPv6 server does not support allocation of a default gateway, and the RA in SLAAC does not support distribution of the DNS.

At present, the two automatic configuration manners are combined for use in a conventional art, i.e., the default gateway is declared with the RA in SLAAC, and a DNS address is declared with the DHCPv6 server in stateful address automatic configuration.

However, for the data channel product, the user side may acquire IPv6 address information through SLAAC. However, for the IPv6 DNS address, because there is no built-in DHCPv6 server function, a third-party program is required to be installed on the user side, and the DNS address is acquired from the data channel product by user intervention or automatic receiving and sending of the program, and then is forcibly configured to the user side.

However, for some scenarios, the data channel product is required to be exist in a drive-free form on the user side and support plug-and-play, any third-party application or drive program is not required to be installed and is impossible to be installed, and in addition, the data channel product does not support the DHCPv6 server function, therefore, a problem about DNS address configuration in an IPv6 address configuration process cannot be solved.

### SUMMARY

Embodiments of the disclosure are intended to provide a method and device for DNS address configuration and a computer storage medium, which may solve a problem about DNS address configuration in an IPv6 address configuration process without any third-party application or drive program installed on a user side.

In order to achieve the purpose, the technical solutions of the embodiments of the disclosure are implemented as follows.

The embodiments of the disclosure provide a method for DNS address configuration, which may include that:
a DNS request packet encapsulated in a first IPv4 packet and sent by a user side is acquired;
a recording type of the DNS request packet sent by the user side is determined;
an address detection is performed on a first recording type of DNS request packet, a DNS request packet detected to be valid is directly forwarded to a network side, and a DNS request packet detected to be invalid is directly discarded;
a second recording type of DNS request packet is encapsulated into an IPv6 packet and the IPv6 packet is sent to the network side; and
a DNS response packet returned by the network side is encapsulated into a second IPv4 packet and the second IPv4 packet is sent to the user side.

In an embodiment, the step that the second recording type of DNS request packet is encapsulated into the IPv6 packet and sending the IPv6 packet to the network side may include that:
a destination address field of the IPv6 packet is filled with an IPv6 DNS address in the Second recording type of DNS request packet, a source address filed of the IPv6 packet is filled with an IPv6 public network Internet Protocol (IP) address in the Second recording type of DNS request packet, and the IPv6 packet is sent to the network side,
wherein the IPv6 DNS address and the IPv6 public network IP address may be obtained in a connection Over the Air (OTA) technical message of an IPv6 channel; and
the first recording type may be a type A representing IPv4 address parsing, and the second recording type may be a type AAAA representing IPv6 address parsing.

In an embodiment, , the method may further include that: before the step that the DNS request packet encapsulated in the first IPv4 packet and sent by the user side is acquired, a current dialing request is acquired.

In an embodiment, the method may further include that: when the current dialing request is an IPv6 dialing request,
an IPv4 network connection success indication is faked according to the current IPv6 dialing request; and
an IPv4 channel with the user side is established through the IPv4 network connection success indication, wherein the IPv4 channel may be configured to transmit the first IPv4 packet and the second IPv4 packet.

In an embodiment, the method may further include that: when the current dialing request is an IPv4 dialing request and an IPv6 dialing request,
it is detected that no DHCP request process is initiated by the user side or a DHCP request process is abnormal, and a network disconnection indication is sent to the user side;
an IPv4 network connection success indication is faked according to the current IPv6 dialing request; and
an IPv4 channel with the user side is established through the network connection success indication, wherein the IPv4 channel may be configured to transmit the first IPv4 packet and the second IPv4 packet.

The embodiments of the disclosure further provide a device for DNS address configuration, which may include:
a DNS request packet acquisition module, configured to acquire a DNS request packet encapsulated in a first IPv4 packet and sent by a user side;
a recording type determination module, configured to determine a recording type of the DNS request packet sent by the user side;
a detection module, configured to perform an address detection on a first recording type of DNS request packet, directly forward a DNS request packet detected to be valid to a network side, and directly discard a DNS request packet detected to be invalid; and
an encapsulation and sending module, configured to encapsulate a second recording type of DNS request packet into an IPv6 packet and send the IPv6 packet to the network side and further configured to encapsulate a DNS response packet returned by the network side into a second IPv4 packet and send the second IPv4 packet to the user side.

In an embodiment, the encapsulation and sending module may further be configured to: fill a destination address field of the IPv6 packet with an IPv6 DNS address in the Second recording type of DNS request packet, fill a source address filed of the IPv6 packet with an IPv6 public network IP address in the Second recording type of DNS request packet and send the IPv6 packet to the network side, wherein the IPv6 DNS address and the IPv6 public network IP address may be obtained in a connection OTA technical message of an IPv6 channel; and
the first recording type may be a type A representing IPv4 address parsing, and the second recording type may be a type AAAA representing IPv6 address parsing.

In an embodiment, the device may further include:
a dialing request acquisition module, configured to acquire a current dialing request.
As an implementation, the dialing request acquisition module may further be configured to: when the current dialing request is an IPv6 dialing request,
fake an IPv4 network connection success indication according to the current IPv6 dialing request, and
establish an IPv4 channel with the user side through the IPv4 network connection success indication, wherein the IPv4 channel may be configured to transmit the first IPv4 packet and the second IPv4 packet.

In an embodiment, the dialing request acquisition module may further be configured to:
when the current dialing request is an IPv4 dialing request and an IPv6 dialing request,
detect that no DHCP request process is initiated by the user side or the DHCP request process is abnormal and send a network disconnection indication to the user side,
fake an IPv4 network connection success indication according to the current IPv6 dialing request, and
establish an IPv4 channel with the user side through the IPv4 network connection success indication, wherein the IPv4 channel may be configured to transmit the first IPv4 packet and the second IPv4 packet.

The embodiment of the disclosure further provides a computer storage medium stored therein computer-executable instructions that, when executed by a processor, cause the processor to execute the method for DNS address configuration of the embodiments of the disclosure.

According to the method for DNS address configuration provided by the embodiments of the disclosure, a data channel product acquires a current dialing request, under a dual-stack dialing request condition, both the IPv4 channel and the IPv6 channel exist between the user side and the data channel product, and if a DHCP request process is normal, the both channels are normal channels; if the DHCP request process is abnormal, the IPv4 channel is invalid, and then the data channel product sends a network disconnection indication to the user side at first, and then performs processing according to a single-stack IPv6 dialing request condition; under the single-stack IPv6 dialing request condition an IPv4 network connection success indication is faked, the IPv4 network connection success indication being configured to establish an IPv4 channel for only transmitting the IPv4 packet between the user side and the data channel product; then, a DNS request packet encapsulated in a first IPv4 packet and sent by the user side is acquired; next, the data channel product determines a recording type of the DNS request packet sent by the user side, directly forwards a valid first recording type (the type A) of DNS request packet to a network side, and encapsulates a second recording type (the type AAAA) of DNS request packet into an IPv6 packet and sends the IPv6 packet to the network side; and finally, the data channel product encapsulates a DNS response packet returned by the network side into a second IPv4 packet and sends the second IPv4 packet to the user side.

Obviously, in the embodiments of the disclosure, a DNS address configuration manner supports single-stack IPv6 dialing and IPv4 and IPv6 dual-stack dialing, and may also process a condition that one channel of a IPv4 channel and a IPv6 channel fails during the IPv4 and IPv6 dual-stack dialing, so that a problem about DNS address configuration in an IPv6 address configuration process may be solved only on the basis of a basic SLAAC protocol without installing any third-party program or drive on the user side as well as any DHCPv6 server; and in addition, interaction between the network side and the user side is minimized, so that adaptability to various novel operating systems may be achieved.

### BRIEF DESCRIPTION OF DRAWINGS

FIG. 1 is a flowchart of embodiment 1 of a method forDNS address configuration according to the disclosure.
FIG. 2 is a flowchart of a method for DNS address configuration under an IPv4 and IPv6 dual-stack dialing condition according to an embodiment of the disclosure.
FIG. 3 is a flowchart of a method for DNS address configuration under an IPv6 single-stack dialing condition according to an embodiment of the disclosure.
FIG. 4 is a flowchart of a method for DNS address configuration under the condition that both IPv4 dialing request and the IPv6 dialing request exist and no DHCP request process is initiated by the user side or the DHCP request process is abnormal according to an embodiment of the disclosure.
FIG. 5 is a structure diagram of an embodiment of a device for DNS address configuration according to the disclosure.

### DETAILED DESCRIPTION

The technical solutions in the embodiments of the disclosure will be clearly and completely described below in combination with the drawings in the embodiments of the disclosure.

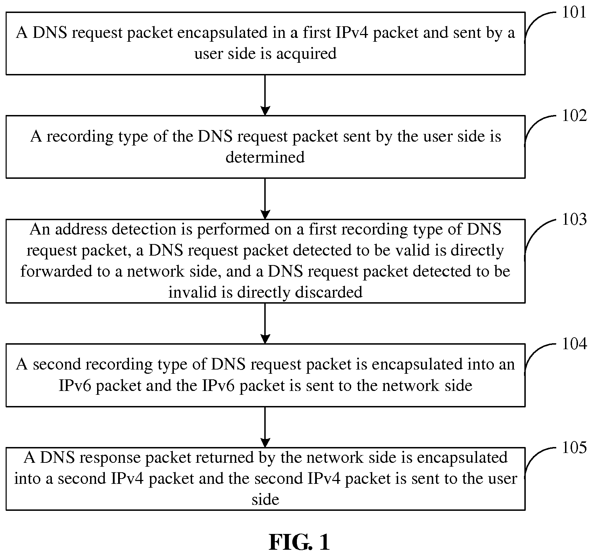

FIG. 1 is a flowchart of a first embodiment of a Method for DNS address configuration according to the disclosure. As shown in FIG. 1, the method may include the following steps.

In Step 101, a DNS request packet encapsulated in a first IPv4 packet and sent by a user side is acquired.

In a connection process of the user side and a network side, a Packet Data Protocol (PDP) may be activated, and after the PDP is activated, an IPv4 DNS address and/or an IPv6 DNS address may be stored in the user side.

Before the step 101, a data channel product may further acquire a current dialing request. Herein, the current dialing request is described under specific conditions as follows.

Under a dual-stack dialing request condition, i.e. a condition that there are both IPv4 and IPv6 dialing requests, after successful dialing, there may be an IPv4 channel and an IPv6 channel between the user side and the data channel product; for an IPv4, information such as an IP address and a DNS address may be acquired usually through a DHCP; and for an IPv6, the IP address is acquired through stateless address autoconfiguration (SLAAC) with a router advertisement (RA), and no IPv6 DNS address is obtained. When a user is online, in the user side, an IPv4 DNS request packet and an IPv6 DNS request packet are encapsulated in the first IPv4 packet and the first IPv4 packet is sent to the data channel product through an IPv4 channel, and then the data channel product may acquire the IPv4 DNS request packet and IPv6 DNS request packet encapsulated in the first IPv4 packet.

Under a single-stack dialing condition, there are further two conditions, the first condition is a single IPv6 dialing request condition, and the second condition is a single IPv4 dialing request condition.

Under the single IPv6 dialing request condition, if only the IPv6 dialing request is currently acquired, an IPv4 network connection success indication is faked according to the IPv6 dialing request; and an IPv4 channel with the user side is established through the IPv4 network connection success indication, wherein the IPv4 channel is configured to transmit the first IPv4 packet and a second IPv4 packet.

A specific processing procedure is as follows: after the success of IPv6 dialing, the IPv6 channel exists between the user side and the data channel product, but no IPv4 channel exists, thus the data channel product may fake the IPv4 network connection success indication to enable the user side to establish an IPv4 channel between the user side and the data channel product and cause the IPv4 channel to be enabled.

For example: on a Windows operating system, it is reflected that a network card starts to send a DHCP request from an "unplugged" state. In fact, after the success of IPv4 dialing under a normal condition, such a network connection success indication is obtained by the user side such that the network card is caused to be enabled and initiate the DHCP request to acquire an address, however, since there is no IPv4 dialing on an air interface here, after receiving a DHCP DISCOVER request from the user side, a DHCP server of the data channel product may generate a spoof IP address or configure a local area network IP address like 192.168.x.x to the user side as long as such an IP address is recorded by the data channel product and may be subsequently detected. By such a DHCP process, the user side may acquire such an IPv4 address. Therefore, an IPv4 channel and an IPv6 channel exist between the user side and the data channel product, and for the IPv4, information such as the IP address and the DNS address may all be acquired usually through the DHCP; and for the IPv6, the IP address is acquired through SLAAC with the RA, and no IPv6 DNS address is obtained. When the user is online, in the user side, an IPv4 DNS request packet and an IPv6 DNS request packet are encapsulated in the first IPv4 packet and the first IPv4 is sent to the data channel product through an IPv4 channel, and then the data channel product may acquire the IPv4 DNS request packet and IPv6 DNS request packet encapsulated in the first IPv4 packet.

Under the single IPv4 dialing request condition, operations are only required to be executed according to a flow of the conventional art, and will not be elaborated herein.

Under the dual-stack dialing request condition, i.e. the condition that both the IPv4 dialing request and the IPv6 dialing request exist and no the DHCP request process is initiated by the user side or the DHCP request process is abnormal,
if the IPv4 dialing request and the IPv6 dialing request are currently acquired and it is detected that no DHCP request process is initiated by the user side or the DHCP request process is abnormal, a network disconnection indication is sent to the user side;
an IPv4 network connection success indication is faked according to the IPv6 dialing request; and
an IPv4 channel with the user side is established through the IPv4 network connection success indication, wherein the IPv4 channel is configured to transmit the first IPv4 packet and the second IPv4 packet.

A specific processing procedure is as follows: when both the IPv4 and IPv6 dialing requests exist, due to following reasons in the user side, for example, since a DHCP Client Server is disabled, the user side may not initiate any DHCP request, or for example, if Mobile Broadband Interface Module (MBIM) equipment adopts a static IP configuration manner on a Windows 8 system, after the data channel product is plugged next time, the user side adopts the static IP configuration manner as a default and will initiate no DHCP process. In a word, it is common that no DHCP process is initiated after the user side receives the "network connection success indication" of the IPv4 channel, or the DHCP process between the user side and the data channel product is abnormal, as a result, the user side may finally obtain an invalid IP like "169.254.x.x", which may occur for systems of Windows, Mac and the like. Once such a condition occurs, the IPv4 channel between the user side and the data channel product is remain invalid, and the IPv4 packets cannot be transmitted through the IPv4 channel. For the IPv4, since the user side may send an IP packet to a network side after network connection and a source address of the IP packet is "169.254.x.x", the data channel product may detect whether the IP packet of the source address exists, once the data channel product determines that the IP packet of the source address exists, it is detemined that the IPv4 channel is abnormal, then the data channel product establishes and sends the network disconnection indication to the user side, such that state of the network card of the IPv4 channel is changed to be "unplugged", and then a process is performed by a processing manner under the single IPv6 dialing request condition, such that the spoof IP is allocated to the user side and the IPv4 channel is established between the user side and the data channel product and the IP4 channel is only configured to transmit an IPv4 packet including an DNS request/response packet.

In Step 102, a recording type of the DNS request packet sent by the user side is determined.

After acquiring the first IPv4 packet, the data channel product detects the recording type in the DNS request packet, i.e., a Type field in the DNS request packet is detected. If a first recording type, i.e. a type A, is parsed, IPv4 address parsing is represented; and if a second recording type, i.e. a type AAAA, is parsed, IPv6 address parsing is represented.

In Step 103, an address detection is performed on a first recording type of DNS request packet, a DNS request packet detected to be valid is directly forwarded to a network side, and a DNS request packet detected to be invalid is directly discarded.

Here, the DNS request packet detected to be valid refers to a DNS request packet detected to contain an IP packet of which both a source IP address and destination IP address are valid; and the DNS request packet detected to be invalid refers to a DNS request packet detected to contain an IP address of which both a source IP address and destination IP address are invalid or a DNS request packet detected to contain an IP packet of which one of a source IP address and destination address is valid and the other is invalid.

The data channel product performs an IPv4 source address detection on the first recording type of DNS request packet (the type A), and directly forwards the DNS request packet to an IPv4 DNS server of the network side through the IPv4 channel if detecting that both the source IP address and the destination IP address of the IP packet contained in the DNS request packet are valid, otherwise directly discards it.

In Step 104, a second recording type of DNS request packet is encapsulated into an IPv6 packet and the IPv6 packet is sent to the network side.

At first, the data channel product extracts the second recording type of DNS request packet (the type AAAA) from the first IPv4 packet, and fills a destination address field of the IPv6 packet with an IPv6 DNS address and fills a source address filed of the IPv6 packet with an IPv6 public network IP address in the second recording type of DNS request packet and sends the filled IPv6 to the network side through an IPv6 channel established between the data channel product and the network side, wherein the IPv6 DNS address and the IPv6 public network IP address may be obtained in a connection OTA technical message of the IPv6 channel.

It is important to note that, in the disclosure, Step 103 and Step 104 may be executed at the same time and Step 103 may also be executed after Step 104, which may be set according to a practical condition and is not limited herein.

In Step 105, a DNS response packet returned by the network side is encapsulated into a second IPv4 packet and the second IPv4 packet is sent to the user side.

The data channel product encapsulates an IPv4 DNS response packet and an IPv6 DNS response packet returned by the network side into a second IPv4 packet, and then sends the second IPv4 packet to the user side through an IPv4 channel established between the data channel product and the user side, and the user side may subsequently acquire a correct IPv6 DNS address and then perform Transmission Control Protocol (TCP) connection.

According to the Method for DNS address configuration for the data channel product provided by the embodiment, the data channel product at first acquires a current dialing request, under the dual-stack dialing request condition, both the IPv4 channel and the IPv6 channel exist between the user side and the data channel product, and if the DHCP request process is normal, the both channels are completely normal channels; under the single-stack IPv6 dialing request condition, the IPv4 network connection success indication is faked, the IPv4 network connection success indication being configured to establish an IPv4 channel for only transmitting the IPv4 packet between the user side and the data channel product; under the dual-stack dialing request condition, both the IPv4 channel and the IPv6 channels exist between the user side and the data channel product, if the DHCP request process is abnormal, the IPv4 channel is invalid, and then the data channel product sends the network disconnection indication to the user side at first, and then performs a process by a processing manner under the single-stack IPv6 dialing request condition; then, the data channel product acquires a DNS request packet encapsulated in a first IPv4 packet and sent by a user side, and determine a recording type of the DNS request packet sent by the user side, directly forwards a valid first recording type (the type A) of DNS request packet to a network side, and encapsulates a second recording type (the type AAAA) of DNS request packet into an IPv6 packet and sends the IPv6 packet to the network side; and finally, the data channel product encapsulates a DNS response packet returned by the network side into a second IPv4 packet and sends the second IPv4 packet to the user side.

The DNS address configuration manner supports single-stack IPv6 dialing and IPv4 and IPv6 dual-stack dialing, and may also process a condition that one channel of a IPv4 channel and a IPv6 channel fails during the IPv4 and IPv6 dual-stack dialing, so that a problem about DNS address configuration in an IPv6 address configuration process may be solved only on the basis of a basic SLAAC protocol without installing any third-party program or drive on the user side as well as any DHCPv6 server; and in addition, interaction between the network side and the user side is minimized, so that adaptability to various novel operating systems may be achieved.

An embodiment of the disclosure further provides a computer storage medium stored therein computer-executable instructions that, when executed by a processor, cause the processor to execute the Method for DNS address configuration of the embodiment of the disclosure.

In order to manifest the purpose of the disclosure more, descriptions will be further made with examples on the basis of the abovementioned embodiment.

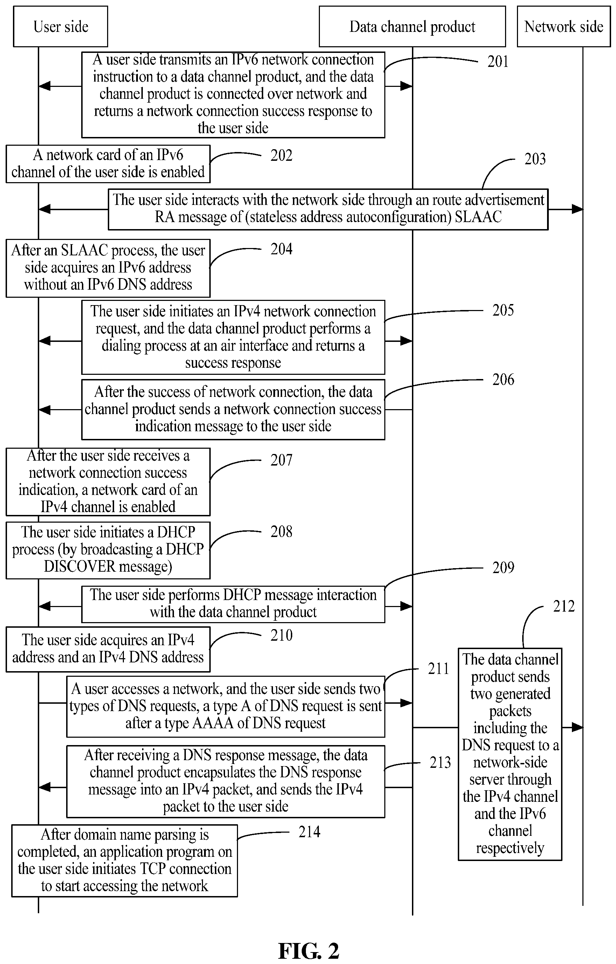

FIG. 2 is a flowchart of a Method for DNS address configuration under an IPv4 and IPv6 dual-stack dialing condition according to an embodiment of the disclosure. As shown in FIG. 2, the embodiment of the disclosure may include the following steps.

In Step 201, a user side transmits an IPv6 network connection instruction to a data channel product, and the data channel product is connected over network and returns a connection success response to the user side.

In Step 202, a network card of an IPv6 channel of the user side is enabled.

In Step 203, the user side interacts with a network side through an RA message of SLAAC.

In Step 204, after an SLAAC process, the user side acquires an IPv6 address without an IPv6 DNS address.

In Step 205, the user side initiates an IPv4 network connection request, and the data channel product performs a dialing process at an air interface and returns a success response.

In Step 206, after the success of network connection, the data channel product sends a network connection success indication message to the user side.

In Step 207, after the user side receives a network connection success indication, a network card of an IPv4 channel is enabled.

In Step 208, the user side initiates a DHCP process (by broadcasting a DHCP DISCOVER message).

In Step 209, the user side performs DHCP message interaction with the data channel product.

In Step 210, the user side acquires an IPv4 address and an IPv4 DNS address.

In Step 211, a user accesses a network, and the user side sends two types of DNS requests, a type A of DNS request is sent after a type AAAA of DNS request.

In Step 212, the data channel product sends two generated packets including the DNS request to a network-side server through the IPv4 channel and the IPv6 channel respectively.

In Step 213, after receiving a DNS response message, the data channel product encapsulates the DNS response message into an IPv4 packet, and sends the IPv4 packet to the user side.

In Step 214, after domain name parsing is completed, an application program on the user side initiates TCP connection to start accessing the network.

In the embodiment, address configuration under an IPv4 and IPv6 dual-stack dialing condition and a processing flow of a condition of IPv6 DNS address configuration without a DHCPv6 on the user side are implemented.

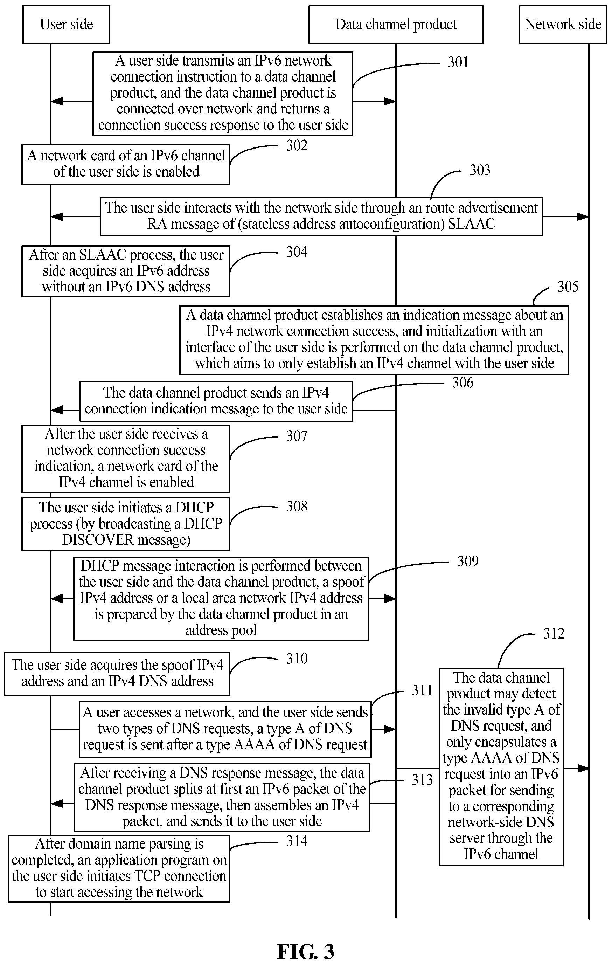

FIG. 3 is a flowchart of a Method for DNS address configuration under an IPv6 single-stack dialing condition according to an embodiment of the disclosure. As shown in FIG. 3, the embodiment of the disclosure may include the following steps.

Step 301 to Step 304 are the same as Step 201 to Step 204 shown in FIG. 2, and implement a process of connecting an IPv6 channel and acquiring an IPv6 address, and a user side still has no IPv6 DNS address.

In Step 305, a data channel product establishes an indication message about an IPv4 network connection success, and initialization with an interface of the user side is performed on the data channel product, which aims to only establish an IPv4 channel with the user side.

In Step 306, the data channel product sends an IPv4 connection indication message to the user side.

In Step 307, after the user side receives a network connection success indication, a network card of the IPv4 channel is enabled.

In Step 308, the user side initiates a DHCP process (by broadcasting a DHCP DISCOVER message).

In Step 309, DHCP message interaction is performed between the user side and the data channel product, a spoof IPv4 address or a local area network IPv4 address is prepared by the data channel product in an address pool.

In Step 310, the user side acquires the spoof IPv4 address and an IPv4 DNS address.

In Step 311, a user accesses a network, and the user side sends two types of DNS requests, a type A of DNS request is sent after a type AAAA of DNS request. Of course, the type A is invalid, and will be discarded in the data channel product.

In Step 312, the data channel product may detect the invalid type A of DNS request, and only encapsulates a type AAAA of DNS request into an IPv6 packet for sending to a corresponding network-side DNS server through the IPv6 channel.

In Step 313, after receiving a DNS response message, the data channel product splits at first an IPv6 packet of the DNS response message, then assembles an IPv4 packet, and sends it to the user side.

In Step 314, after domain name parsing is completed, an application program on the user side initiates TCP connection to start accessing the network.

In the embodiment, address configuration under an IPv6 single-stack dialing condition is implemented, and the data channel product may maintain the local area network IP or another recognizable spoof IP in the DHCP address pool and allocate it to the user side to achieve an effect which is the same as that of IPv4 and IPv6 dual-stack dialing between the user side and the data channel product.

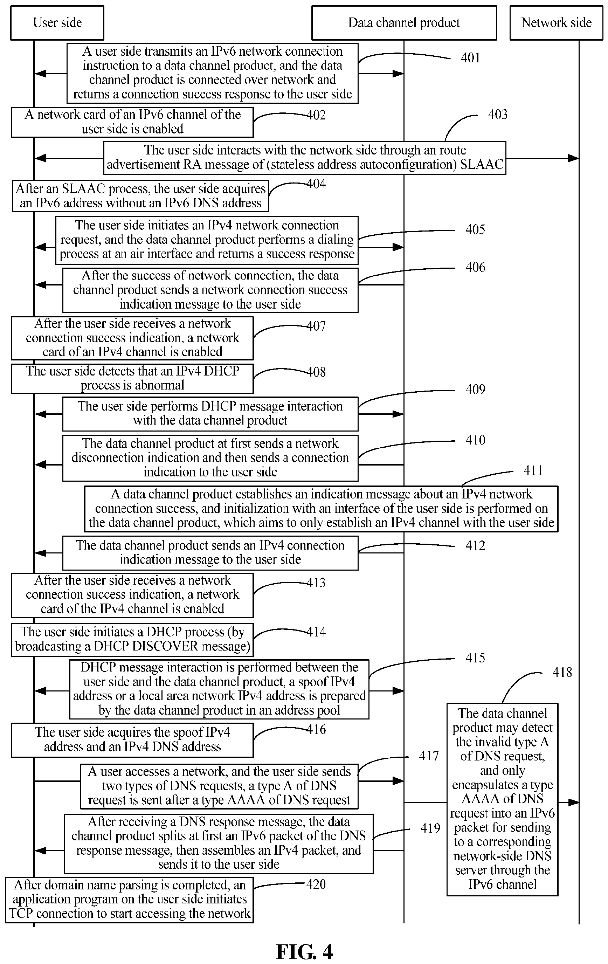

FIG. 4 is a flowchart of a Method for DNS address configuration under the condition that both the IPv4 dialing request and the IPv6 dialing request exist and no DHCP request process initiated by the user side or the DHCP request process is abnormal according to an embodiment of the disclosure. As shown in FIG. 4, the embodiment of the disclosure may include the following steps.

Steps 401 to 404 are the same as Steps 201 to 204 shown in FIG. 2, and implement a process of connecting an IPv6 channel and acquiring an IPv6 address, and a user side still has no IPv6 DNS address.

Steps 405 to 407 are the same as Steps 205 to 207 shown in FIG. 2, and implement a process of connecting an IPv4 channel.

In Step 408, the user side detects that an IPv4 DHCP process is abnormal, for example, DHCP DISCOVER broadcast is transmitted by the user side, so that no valid IPv4 address is acquired by the user side, and an invalid IPv4 address 169.254.x.x is finally obtained.

In Step 409, the user side performs DHCP message interaction with a data channel product. For example, if the data channel product detects an IP packet of which a source address is 169.254.x.x and which is sent from the user side on the IPv4 channel, it is determined that the IPv4 channel is abnormal.

In Step 410, the data channel product at first sends a network disconnection indication and then sends a connection indication to the user side, to restart an IPv4 acquisition process. From here, the following steps correspond to steps under an IPv6 single-stack dialing condition.

Step 411 to Step 420 are the same as Step 305 to Step 314 shown in FIG. 3, and implement a spoof IPv4 address acquisition process of an IPv4 and a processing process of the DNS requests by the data channel product.

In the embodiment, the IPv4 data packet including a DNS address may still be transmitted between the user side and the data channel product under the condition that both the IPv4 dialing request and the IPv6 dialing request and the DHCP request process is initiated by the user side or the DHCP request process is abnormal.

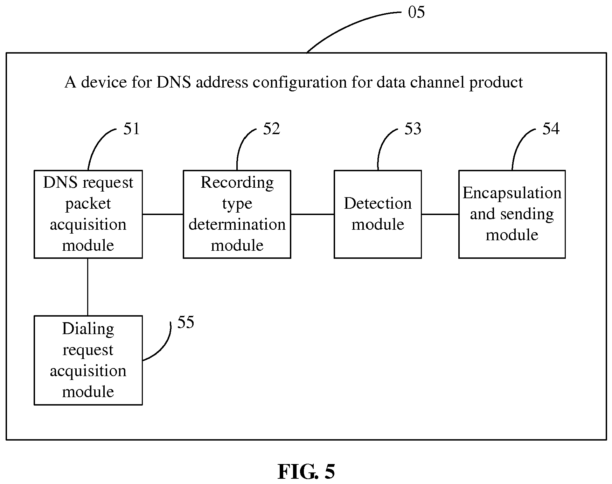

FIG. 5 is a structure diagram of an embodiment of a Device for DNS address configuration according to the disclosure. As shown in FIG. 5, the device 05 includes: a DNS request packet acquisition module 51, a recording type determination module 52, a detection module 53 and an encapsulation and sending module 54, wherein
the DNS request packet acquisition module 51 is configured to acquire a DNS request packet encapsulated in a first IPv4 packet and sent by a user side;
the recording type determination module 52 is configured to determine a recording type of the DNS request packet sent by the user side;
the detection module 53 is configured to perform an address detection on a first recording type of DNS request packet, directly forward a DNS request packet detected to be valid to a network side, and directly discard a DNS request packet detected to be invalid; and
the encapsulation and sending module 54 is configured to encapsulate a second recording type of DNS request packet into an IPv6 packet and send the IPv6 packet to the network side, and is further configured to encapsulate a DNS response packet returned by the network side into a second IPv4 packet and sending the second IPv4 packet to the user side.

In an embodiment, the encapsulation and sending module 54 is further configured to: fill a destination address field of the IPv6 packet with an IPv6 DNS address in the second recording type of DNS request packet, fill a source address filed of the IPv6 packet with an IPv6 public network IP address in the second recording type of DNS request packet, and send the IPv6 packet to the network side, wherein the IPv6 DNS address and the IPv6 public network IP address are obtained in a connection OTA technical message of an IPv6 channel; and
the first recording type is a type A representing IPv4 address parsing, and
the second recording type is a type AAAA representing IPv6 address parsing.

In an embodiment, the device 05 further includes: a dialing request acquisition module 55, configured to acquire a current dialing request.

As an implementation, the dialing request acquisition module 55 is further configured to: when the current dialing request is an IPv6 dialing request,
fake an IPv4 network connection success indication according to the current IPv6 dialing request, and
establish an IPv4 channel with the user side through the IPv4 network connection success indication, wherein the IPv4 channel is configured to transmit the first IPv4 packet and the second IPv4 packet.

In an embodiment, the dialing request acquisition module 55 is further configured to: when the current dialing request is an IPv4 dialing request and an IPv6 dialing request,
detect that no DHCP request process is initiated by the user side or the DHCP request process is abnormal and send a network disconnection indication to the user side,
fake the IPv4 network connection success indication according to the IPv6 dialing request, and
establish an IPv4 channel with the user side through the IPv4 network connection success indication, wherein the IPv4 channel may be configured to transmit the first IPv4 packet and the second IPv4 packet.

The device of the embodiment may be configured to execute the technical solutions of the method embodiment, and the implementation principles and technical effects are similar with those described above, and will not be elaborated herein. During a practical application, the DNS request packet acquisition module 51, the recording type determination module 52, the detection module 53, the encapsulation and sending module 54 and the dialing request acquisition module 55 may be implemented through a device located on a terminal, for example, a Central Processing Unit (CPU), a Micro Processing Unit (MPU), a Digital Signal Processor (DSP) and a Field-Programmable Gate Array (FPGA).

Those skilled in the art should know that the embodiment of the disclosure may be provided as a method, a system or a computer program product. Therefore, the disclosure may adopt a form of hardware embodiment, software embodiment and combined software and hardware embodiment. Moreover, the disclosure may adopt a form of computer program product implemented on one or more computer-available storage media (including, but not limited to, a disk memory and an optical memory) including computer-available program codes.

The disclosure is described with reference to flowcharts and/or block diagrams of the method, equipment (system) and computer program product according to the embodiment of the disclosure. It should be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of other programmable data processing equipment to generate a machine, so that a device for realizing a function specified in one flow or more flows in the flowcharts and/or one block or more blocks in the block diagrams is generated by the instructions executed through the computer or the processor of the other programmable data processing equipment.

These computer program instructions may also be stored in a computer-readable memory capable of guiding the computer or the other programmable data processing equipment to work in a specific manner, so that a product including an instruction device may be generated by the instructions stored in the computer-readable memory, the instruction device realizing the function specified in one flow or many flows in the flowcharts and/or one block or many blocks in the block diagrams.

These computer program instructions may further be loaded onto the computer or the other programmable data processing equipment, so that a series of operating steps are executed on the computer or the other programmable data processing equipment to generate processing implemented by the computer, and steps for realizing the function specified in one flow or many flows in the flowcharts and/or one block or many blocks in the block diagrams are provided by the instructions executed on the computer or the other programmable data processing equipment.

The above is only the preferred embodiment of the disclosure and not intended to limit the scope of protection of the disclosure.

### INDUSTRIAL APPLICABILITY

The DNS address configuration manner of the embodiment of the disclosure supports single-stack IPv6 dialing and IPv4 and IPv6 dual-stack dialing, and may also process a condition that one of a IPv4 channel and a IPv6 channel fails during the IPv4 and IPv6 dual-stack dialing, so that a problem about DNS address configuration in an IPv6 address configuration process may be solved only on the basis of a basic SLAAC protocol without installing any third-party program or drive on the user side as well as any DHCPv6 server; and in addition, interaction between the network side and the user side is minimized, so that adaptability to various novel operating systems may be achieved.

## Claims

1. A method for Domain Name System, DNS, address configuration, **characterized in that**, the method comprises:
acquiring a DNS request packet encapsulated in a first Internet Protocol Version 4, IPv4, packet and sent by a user side;
determining a recording type of the DNS request packet sent by the user side;
performing an address detection on a first recording type of DNS request packet, directly forwarding a DNS request packet detected to be valid to a network side, and directly discarding a DNS request packet detected to be invalid;
encapsulating a second recording type of DNS request packet into an Internet Protocol Version 6, IPv6, packet and sending the IPv6 packet to the network side; and
encapsulating a DNS response packet returned by the network side into a second IPv4 packet and sending the second IPv4 packet to the user side.

2. The method according to claim 1, wherein encapsulating the second recording type of DNS request packet into the IPv6 packet and sending the IPv6 packet to the network side comprises:
filling a destination address field of the IPv6 packet with an IPv6 DNS address in the second recording type of DNS request packet,
filling a source address filed of the IPv6 packet with an IPv6 public network Internet Protocol, IP, address in the second recording type of DNS request packet; and
sending the IPv6 packet to the network side,
wherein the IPv6 DNS address and the IPv6 public network IP address are obtained in a connection Over the Air ,OTA, technical message of an IPv6 channel; and
the first recording type is a type A representing IPv4 address parsing, and the second recording type is a type AAAA representing IPv6 address parsing.

3. The method according to claim 1 or 2, further comprising: before acquiring the DNS request packet encapsulated in the first IPv4 packet and sent by the user side, acquiring a current dialing request.

4. The method according to claim 3, further comprising:
when the current dialing request is an IPv6 dialing request,
faking an IPv4 network connection success indication according to the current IPv6 dialing request; and
establishing an IPv4 channel with the user side through the IPv4 network connection success indication, wherein the IPv4 channel is configured to transmit the first IPv4 packet and the second IPv4 packet.

5. The method according to claim 3, further comprising:
when the current dialing request is an IPv4 dialing request and an IPv6 dialing request,
detecting that no Dynamic Host Configuration Protocol, DHCP, request process is initiated by the user side or a DHCP request process is abnormal, and sending a network disconnection indication to the user side;
faking an IPv4 network connection success indication according to the IPv6 dialing request; and
establishing an IPv4 channel with the user side through the IPv4 network connection success indication, wherein the IPv4 channel is configured to transmit the first IPv4 packet and the second IPv4 packet.

6. A device for Domain Name System, DNS, address configuration, **characterized in that**, the device comprises:
a DNS request packet acquisition module, configured to acquire a DNS request packet encapsulated in a first Internet Protocol Version 4, IPv4, packet and sent by a user side;
a recording type determination module, configured to determine a recording type of the DNS request packet sent by the user side;
a detection module, configured to perform an address detection on a first recording type of DNS request packet, directly forward a DNS request packet detected to be valid to a network side, and directly discard a DNS request packet detected to be invalid; and
an encapsulation and sending module, configured to encapsulate a second recording type of DNS request packet into an Internet Protocol Version 6, IPv6, packet and send the IPv6 packet to the network side and further configured to encapsulate a DNS response packet returned by the network side into a second IPv4 packet and send the second IPv4 packet to the user side.

7. The device according to claim 6, wherein the encapsulation and sending module is further configured to: fill a destination address field of the IPv6 packet with an IPv6 DNS address in the second recording type of DNS request packet, fill a source address filed of the IPv6 packet with an IPv6 public network Internet Protocol, IP, address in the second recording type of DNS request packet, and send the IPv6 packet to the network side,
wherein the IPv6 DNS address and the IPv6 public network IP address are obtained in a connection Over The Air, OTA technical message of an IPv6 channel; and
the first recording type is a type A representing IPv4 address parsing, and the second recording type is a type AAAA representing IPv6 address parsing.

8. The device according to claim 6 or 7, further comprising:
a dialing request acquisition module, configured to acquire a current dialing request.

9. The device according to claim 8, wherein the dialing request acquisition module is further configured to: when the current dialing request is an IPv6 dialing request,
fake an IPv4 network connection success indication according to the current IPv6 dialing request, and
establish an IPv4 channel with the user side through the IPv4 network connection success indication, wherein the IPv4 channel is configured to transmit the first IPv4 packet and the second IPv4 packet.

10. The device according to claim 8, wherein the dialing request acquisition module is further configured to:
when the current dialing request is an IPv4 dialing request and an IPv6 dialing request,
detect that no Dynamic Host Configuration Protocol, DHCP, request process is initiated by the user side or a DHCP request process is abnormal and send a network disconnection indication to the user side,
fake an IPv4 network connection success indication according to the IPv6 dialing request, and
establish an IPv4 channel with the user side through the IPv4 network connection success indication, wherein the IPv4 channel is configured to transmit the first IPv4 packet and the second IPv4 packet.

11. A computer storage medium stored therein computer-executable instructions that, when executed by a processor, cause the processor to execute the method for DNS address configuration according to any one of claims 1-5.
